# EUROPEAN PATENT SPECIFICATION

(11) **EP 4 341 137 B1**
(45) Date of publication and mention of the grant of the patent: **30.04.2025**
(21) Application number: 22728968.3
(22) Date of filing: 16.05.2022
(51) Int. Cl.: B60T 13/66, B60T 13/00, B60T 13/74

(54) **DISC BRAKE EQUIPPED WITH DYNAMIC ADJUSTMENT OF THE CLEARANCE BETWEEN THE BRAKE DISC AND THE PADS AND RELATED METHOD**
SCHEIBENBREMSE AUSGESTATTET MIT DYNAMISCHER EINSTELLUNG DES SPIELS ZWISCHEN BREMSSCHEIBE UND BREMSBELAG UND ZUGEHÖRIGES VERFAHREN
FREIDN À DISQUE ÉQUIPÉ AVEC CALIBRAGE DYNAMIQUE DU JEU ENTRE DISQUE DE FREIN ET SEMELLE DE FREIN ET PROCÉDÉ CORRESPONDANT

(30) Priority: 19.05.2021 IT 202100012968
(43) Date of publication of application: 27.03.2024
(73) Proprietor: Brembo S.p.A., 24035 Curno (Bergamo) (IT)
(72) Inventor: MAZZONI, Matteo, 24035 Curno, Bergamo (IT); ROSSI, Alessandro, 24035 Curno, Bergamo (IT); SZEWCZYK, Beniamin, 24035 Curno, Bergamo (IT); TAVERNINI, Davide, Guildford Surrey GU2 7XH (GB); GRUBER, Patrick, Guildford Surrey GU2 7XH (GB); SORNIOTTI, Aldo, Guildford Surrey GU2 7XH (GB); VIDAL MUNOZ, Victor, Guildford Surrey GU2 7XH (GB)
(74) Representative: Mitola, Marco
(86) International application number: PCT/IB2022/054536
(87) International publication number: WO 2022/243841

(56) References cited:
- WO-A1-2020/066645
- DE-T5- 112015 005 833
- KR-A- 20170 008 094
- US-A1- 2017 217 409
- US-A1- 2020 247 380

## Description

### FIELD OF APPLICATION

The present invention relates to a brake-by-wire (BBW) disc braking system equipped with dynamic adjustment of the distance between the brake disc and pads. Further, the invention concerns a method for adjusting the distance between the brake disc and pads in a BBW-type braking system.

### PRIOR ART

On hydraulic-type disc brake calipers, the distance between the brake disc and pads is defined at the design stage and may not be actively changed. The caliper piston is only passively withdrawn or retracted through the elastic deformation of the seals when the brake control, and thus the hydraulic pressure within the braking system, is released. The piston seals and their seats may be designed so that the seals undergo greater deformation and thus so that a greater force and return stroke (roll back) of the piston is achieved on release. However, this results in a worsening of the braking requirement of having a low brake fluid transfer/displacement and a better braking feel on the pedal (i.e., reduced actuation travel of said pedal). In any case in the known solutions, the position of the piston may not be changed at will while the vehicle is in use.

In BBW-type braking systems without hydraulic fluid, and thus equipped with electro-mechanical calipers, the distance between the brake disc and the pads may be controlled and changed at any time via software, but its value may not be chosen arbitrarily, since it results from a compromise between the following different needs:

- a large or high clearance reduces the residual braking torque on the brake disc and the associated pad wear, but significantly increases the brake response time since it introduces a non-negligible delay between the user's demand for braking action and the actual initiation thereof;

- a small or reduced distance increases braking readiness by reducing the delay in the generation of braking torque, but at the same time it increases the residual braking torque in the absence of a braking demand, pad wear, as well as increasing vehicle fuel consumption resulting in reduced vehicle range (especially in the case of electrically powered vehicles). It also increases the overall pollution of the vehicle in terms of energy consumed and the emission of dust and particles due to pad wear.

Therefore, the distance between the brake disc and pads is a compromise to achieve effective braking action on the one hand and the lowest possible residual torque on the other.

As the solutions of the prior art do not allow dynamic, i.e., real-time, changes in the distance between the brake disc and pads, they do not allow for the optimization of the braking action and the reduction of the residual torque under all the dynamic conditions of vehicle use. Such solutions are disclosed, for example, by KR 2017 0008094 A or WO 2020/066645 A1.

### DISCLOSURE OF THE INVENTION

The need is therefore felt in the art to provide a braking system which allows the technical drawbacks mentioned with reference to the prior art to be resolved.

This need is satisfied by a braking system according to claim 1 and a method for adjusting the distance between the brake disc and pads according to claim 15.

In particular, this need is met by a braking system for a vehicle comprising:
at least one disc brake comprising a brake disc having a disc brake caliper arranged to straddle the brake disc, and at least one pair of pads opposite each other and acting on said brake disc from opposite sides along an axial direction of actuation, parallel to an axis of rotation of the brake disc,
at least one electric actuator, operatively connected to a piston acting as a pusher on at least one of said pads along said actuation direction,
a processing and control unit, operatively connected to said electric actuator, and programmed so as to move the piston and the relative pad along the axial direction, in a forward position so as to press the pad into contact with the brake disc during a braking demand, and so as to bring the piston into a rest or rearward position in which a gap is identified between the pad and the brake disc,
wherein the processing and control unit is programmed to implement an algorithm that, in the absence of a demand for braking action, operates the electric actuator by varying said gap according to at least one dynamic parameter of the vehicle that defines the prediction of a future demand for braking action, so as to increase the gap when a demand for braking action is not imminent, and to reduce the gap when a demand for braking action is imminent.

According to an embodiment, said disc brake caliper at said pad comprises thrust means such as springs or spiders which exert an elastic action of axially distancing the pad from the brake disc so as to retract the pad toward the relevant piston, in the absence of a demand for braking action.

According to an embodiment, the pad is constrained to the relevant piston so that it translates integrally with it along the axial direction of actuation.

According to an embodiment, said algorithm decides whether to establish the gap at a maximum or high value, which corresponds to a defined low residual torque and high response time, or to establish the gap at a low value, which corresponds to a high residual torque and low response time.

According to an embodiment, said dynamic parameter of the vehicle comprises a collision time estimated as the time required for a collision to occur between the vehicle equipped with said braking system and a further vehicle preceding it, without varying the respective speeds and trajectories of said vehicles. If the estimated collision time is reduced, then the gap is also reduced and vice versa.

According to an embodiment, said collision time is estimated as a function of a coefficient of friction of the road surface driven over by the vehicle equipped with said braking system. If the coefficient of friction is reduced then the gap is also reduced and vice versa.

According to an embodiment, said collision time is estimated as a function of a difference in acceleration between the vehicle equipped with said braking system and a further vehicle preceding it. If the difference in acceleration leads to a possible need for braking or a possible collision, then the gap is reduced and vice versa.

According to an embodiment, said dynamic parameter of the vehicle comprises a hazard index, i.e., a dimensionless index defining the collision risk between two vehicles defined as the relationship between a critical braking distance and a critical hazard distance, such that if the critical braking distance is less than the critical hazard distance, the gap is reduced and vice versa.

According to an embodiment, said dynamic parameter of the vehicle comprises a predetermined safety distance between the vehicle equipped with said braking system and a further vehicle preceding it. Obviously if said safety distance is reduced then the gap is also reduced and vice versa.

According to an embodiment, said dynamic parameter of the vehicle equipped with said braking system comprises an emergency signal coming from a vehicle preceding it, with which the vehicle following it is in connection.

According to an embodiment, said dynamic parameter comprises information about real-time traffic conditions along the route of the vehicle.

According to an embodiment, said dynamic parameter of the vehicle equipped with said braking system comprises information about real-time conditions of the route of the vehicle, such as speed limits and/or incline of the road and/or bends.

According to an embodiment, said dynamic parameter of the vehicle comprises a comfort demand by the vehicle's passengers, so as to increase the gap in case of a need for more comfort, and vice versa.

According to an embodiment, said gap variation by the electric actuator is of a discrete type.

According to an embodiment, the algorithm identifies a minimum collision time value and a maximum collision time value. If the value of the collision time is kept within this range, the gap is kept in its current state, while the gap is changed if the collision time exceeds said thresholds defined by said minimum and maximum collision time values. Obviously, in particular, a low collision time implies a probable demand for braking in the short term, while a high collision time implies an unlikely demand for braking in the short term. If the collision time exceeds said maximum value, the gap is established in its upper value, which corresponds to a lower residual torque and a higher response time; conversely, if the collision time becomes less than said minimum value, the gap is established in its lower value, which corresponds to a higher residual torque and a lower response time.

According to an embodiment, the minimum value of collision time is 4.5 s and the maximum value of collision time is 5 s.

According to an embodiment, said variation of the gap by the electric actuator is of a continuous type, so as to vary said gap according to said dynamic parameter of the vehicle, between a minimum and a maximum value.

The invention also covers a vehicle comprising a braking system as previously described.

The invention also relates to a method for controlling a braking system comprising the step of setting up a braking system (4) for a vehicle (8) comprising:
at least one disc brake comprising a brake disc having a disc brake caliper arranged to straddle the brake disc;
and at least one pair of pads opposite each other and acting on said brake disc on sides opposite each other along an axial direction of actuation, parallel to an axis of rotation of the brake disc; at least one electric actuator, operatively connected to a piston acting as a pusher on at least one of said pads along said direction of actuation;
a processing and control unit, operatively connected to said electric actuator and programmed to move the piston and the respective pad along the axial direction to a forward position so as to press the pad in contact with the brake disc during a braking demand and so as to bring the piston and respective pad to a rest or rearward position, wherein a gap is identified between the pad and the brake disc;
wherein the processing and control unit is programmed to implement an algorithm that, in the absence of a braking demand, operates the electric actuator by varying said gap as a function of at least one dynamic parameter of the vehicle that defines the prediction of a future demand for braking action, so as to increase the gap when a braking action is imminent, and decrease the gap when a braking action is not imminent.

### DESCRIPTION OF THE DRAWINGS

Further features and advantages of the present invention will become more apparent from the following description of preferred and non-limiting embodiments thereof, wherein:

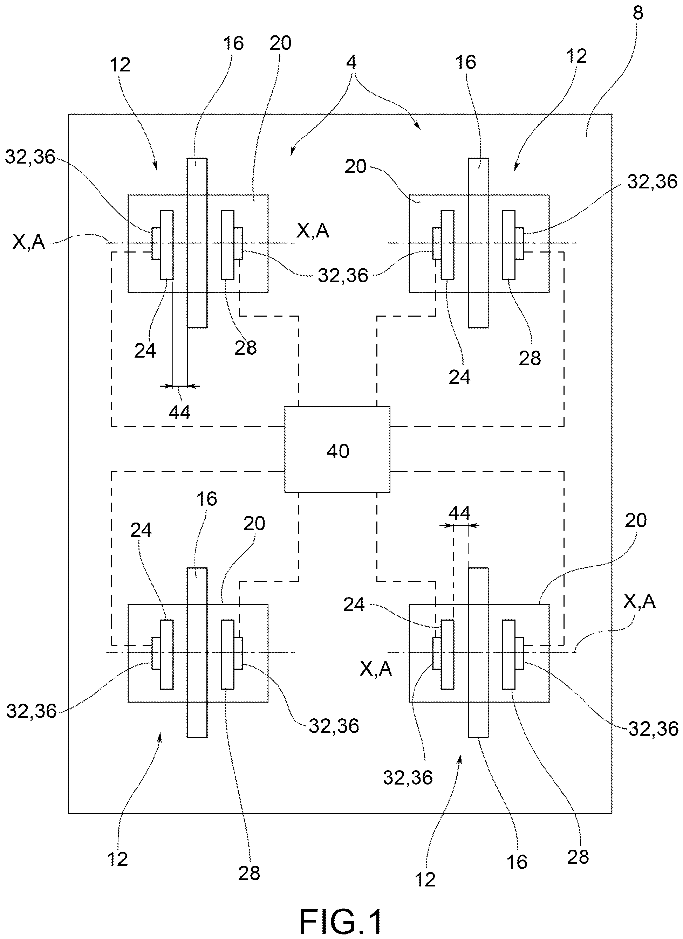

Fig. 1 shows a schematic view of a vehicle comprising a braking system according to an embodiment of the present invention.

Elements or parts of elements common to the embodiments described hereinafter will be indicated with the same reference numerals.

### DETAILED DESCRIPTION

With reference to the aforesaid figures, reference numeral 4 globally denotes a braking system for a vehicle 8.

The braking system 4 comprises at least one disc brake 12 comprising a brake disc 16 having a disc brake caliper 20 arranged to straddle the brake disc 16, and at least one pair of pads 24,28 opposite each other and acting on said brake disc 16 on sides opposite each other along an axial direction of actuation A-A, parallel to an axis of rotation X-X of the brake disc 16. It should be noted that the present invention applies to both fixed-type and floating-type disc brake calipers 20 known in the art.

The disc brake 12 further comprises at least one electric actuator 32 operatively connected to a piston 36 acting as a pusher on at least one of said pads 24 along said axial direction of actuation A-A. In the case of fixed-type disc brake calipers 20, there will be at least one piston 36 acting on at least one pad 24 on each side of the brake disc 16. In the case of floating-type disc brake calipers, there will be at least one piston 36 acting on at least one pad 24 on only one side of said brake disc 16.

The braking system 4 further comprises a processing and control unit 40, operatively connected to said electric actuator 32 and programmed to move the piston 36 and the respective pad 28 along the axial direction of actuation A-A to a forward position, so as to press the pad 28 into contact with the brake disc 16 during a braking demand and so as to bring the piston 36 and the respective pad 28 to a rest or rearward position, wherein a gap 44 between the pad 28 and the brake disc 16 is identified.

Said processing and control unit 40 may be stand-alone, physically integrated into the packaging of the actuator, or integrated into other control units already in the vehicle to perform various functions.

The connection between the electric actuator 32 and the piston may be direct or involve intermediate kinematics, in a known manner.

It is worth noting that said disc brake caliper 20, at said brake pad 24 may comprise thrust means such as springs or spiders 48 which exert an elastic action of axially distancing the pad 24 from the brake disc 16 so as to retract the pad 24 towards the respective piston 36, in the absence of a demand for braking action.

According to a further embodiment, it is possible to constrain the pad 24 to the respective piston 36 so that it translates integrally therewith.

Advantageously, the processing and control unit 40 is programmed to implement an algorithm that, in the absence of a braking demand from the user of the vehicle 8, operates the electric actuator 32 varying said gap 44 as a function of at least one dynamic parameter of the vehicle that defines the prediction of a future demand for braking action by the user, so as to increase the gap 44 when a demand for a braking action is not imminent and reduce the gap 44 when a demand for a braking action is imminent.

Specifically, said algorithm maintains the gap 44 in a range between a maximum value, where there is negligible residual torque (or less than a very low value), i.e., no braking action exerted on the brake disc 16, and a minimum value, where a residual torque or braking action on the brake disc 16 is tolerated.

In this way, if the demand for a braking action is not deemed to be probable, the gap 44 is increased so as to ensure the absence of any braking torque; this is done at the expense of the disc brake's responsiveness to a braking demand that is, however, deemed, as seen, to be either not probable or unlikely.

On the other hand, if the demand for braking action is deemed to be probable, the gap 44 is reduced so as to possibly tolerate a small braking torque; this is done to the advantage of the responsiveness of the disc brake to a braking demand that, as seen, is deemed to be probable.

The algorithm implemented by the processing and control unit 40 may comprise different dynamic parameters of the vehicle.

It should be premised that the dynamic parameters in the following are not alternatives to each other, but may be combined; in other words, the processing and control unit 40 may consider one or more dynamic parameters of the vehicle in order to implement a more or less sophisticated algorithm that takes into account a plurality of parameters that contribute to the definition of the best and most efficient strategy for adjusting said gap 44 according to the actual and contingent driving conditions of the vehicle 8.

According to an embodiment of the present invention, the dynamic parameter comprises a collision time, estimated as the time required for a collision to occur between the vehicle 8 equipped with said braking system 4 and a further vehicle preceding it, without changing the respective speeds and trajectories of said vehicles. If the estimated collision time is reduced then the gap 44 is also reduced and vice versa.

According to a possible embodiment of the present invention, said collision time is estimated as a function of a coefficient of friction of the road surface driven on by the vehicle 8 equipped with said braking system 4. If the coefficient of friction is reduced, then the gap 44 is also reduced and vice versa.

According to a possible embodiment of the present invention, said collision time is estimated as a function of a difference in acceleration between the vehicle 8 equipped with said braking system 4 and an additional vehicle preceding it. If the acceleration difference increases, then the gap 44 also decreases and vice versa.

According to a possible embodiment of the present invention, said dynamic parameter of the vehicle 8 comprises a hazard index, i.e., a dimensionless index that defines the risk of collision between two vehicles defined as the relationship between a critical braking distance and a critical hazard distance, so that if the critical braking distance is less than the critical hazard distance, the gap 44 is reduced and vice versa.

According to a further embodiment of the present invention, said dynamic parameter of the vehicle comprises a predetermined safety distance between the vehicle 8 equipped with said braking system 4 and a further vehicle preceding it. Obviously if said safety distance is reduced, then the gap 44 is also reduced and vice versa.

According to a further embodiment, said dynamic parameter of the vehicle equipped with said braking system comprises an emergency signal coming from a vehicle preceding it, with which the vehicle following it is in connection. In other words, if the vehicle preceding it detects a hazardous situation, then it sends a hazard signal that is picked up by the processing and control unit 40 which commands the electric actuator in order to reduce said gap 44. In effect, the presence of a potential hazardous situation increases the probability of a braking demand and therefore justifies the reduction of the gap 44 and vice versa.

According to a further embodiment, said dynamic parameter comprises information on real-time traffic conditions along the route of the vehicle. Also in this case, the intensification of traffic or information on the approach of a slowdown or jam along the route taken by the vehicle 8 statistically increases the probability of braking demands and thus justifies the reduction of said gap 44 and vice versa.

According to a possible embodiment, said dynamic parameter of the vehicle 8 equipped with said braking system 4 comprises information about real-time conditions on the route of the vehicle, such as speed limits and/or incline of the road and/or bends.

In fact, the presence of a lowered speed limit, a downhill section of road, or a bend all constitute conditions that statistically increase the probability that the user will demand a braking action, and thus they result in the reduction of said gap 44 and vice versa.

According to a further embodiment of the present invention, said dynamic parameter of the vehicle comprises a demand for comfort for passengers of the vehicle 8 so as to increase the gap 44 in case of a need for more comfort and vice versa. In particular, a greater demand for comfort requires a less abrupt braking action and vice versa.

According to the present invention, the variation of the gap 44 by the electric actuator 32 may be of a discrete type.

For example, the algorithm identifies a minimum collision time value and a maximum collision time value, so the change in the gap 44 is made discretely when the collision time exceeds the thresholds defined by those minimum and maximum values, respectively.

According to an embodiment, the minimum collision time value is 4.5 s and the maximum collision time value is 5 s.

According to a further embodiment of the present invention, the variation of the gap 44 by the electric actuator 32 is of a continuous type, so as to vary said gap 44 according to said dynamic parameter of the vehicle 8, between a minimum value and a maximum value.

As may be appreciated from what has been described, the present invention overcomes the drawbacks of the prior art.

Specifically, the braking system of the present invention allows the distance between the brake disc and its pads to be adjusted dynamically and in real time, as a function of a plurality of dynamic parameters of the vehicle and actual, contingent driving conditions.

In this way, the responsiveness to the braking action varies according to a plurality of dynamic parameters of the vehicle that take into account the greater or lesser likelihood that the user will require a braking action depending on traffic, road, hazard, comfort conditions, etc. Thus, when the braking action is not likely, the gap is increased so as to avert any residual torque at the expense of braking readiness, whereas if the braking action is deemed probable, the gap is reduced so as to reduce braking readiness, at the expense of any residual torque, albeit small. It is clear that, overall, the residual torque is normally reduced, thus also reducing the consumption of the friction material of the pads as well as the consumption of the vehicle (whether fuel and/or electricity) .

In this way, in addition to improving driving safety, it is also possible to reduce pad wear, reduce residual braking torque, increase overall vehicle range, reduce particle pollutant emissions from pad wear, and reduce pollutant emissions from the internal combustion engine of vehicles.

Further, as seen, it is possible to improve the driving feel felt by the driver when demanding a braking action since the system allows the gap between the brake disc and the pads, and thus the delay between the demand for braking action and the initiation thereof, to be reduced as much as possible.

It is also possible, as shown, to improve the comfort of the driver and thus the passengers of the vehicle and, in general, the active dynamic safety conditions of said vehicle.

A person skilled in the art, in order to satisfy contingent and specific needs, may make numerous modifications and variations to the systems and methods described above, said modifications and variations all being contained within the scope of the invention as defined in the following claims.

## Claims

1. A braking system (4) for a vehicle (8) comprising:
- at least one disc brake (12) comprising a brake disc (16) having a disc brake caliper (20) arranged to straddle the brake disc (16), and at least one pair of pads (24) opposite each other and acting on said brake disc (16) from opposite sides along an axial direction of actuation (A-A), parallel to an axis of rotation (X-X) of the brake disc (16),
- at least one electric actuator (32), operatively connected to a piston (36) acting as a pusher on at least one of said pads (24) along said actuation direction (A-A),
- a processing and control unit (40), operatively connected to said electric actuator (32), and programmed so as to move said piston (36) and the relative pad (24), along the axial direction of actuation (A-A), in a forward position so as to press the pad (24) in contact with the brake disc (16) during a braking demand, and so as to bring the piston (36) into a rest or rearward position, in which a gap (44) is identified between the pad (24) and the brake disc (16),
- **characterised in that** the processing and control unit (40) is programmed to implement an algorithm that, in the absence of a braking demand, operates the electric actuator (32) varying said gap (44) as a function of at least one dynamic parameter of the vehicle (8) that defines the prediction of a demand for a braking action, so as to increase the gap (44) when the demand for a braking action is not imminent, and to reduce the gap (44) when the demand for a braking action is imminent.

2. The braking system (4) for a vehicle (8) according to claim 1, wherein said disc brake caliper (20), at said pad (24) comprises thrust means such as springs or spiders (48) which exert an elastic action of axially distancing the pad (24) from the brake disc (16) so as to retract the pad (24) towards the respective piston (36), in the absence of a demand for braking action.

3. The braking system (4) for a vehicle (8) according to claim 1 or 2, wherein the pad (24) is connected to the respective piston (36) so as to translate integrally therewith along the axial direction of actuation (A-A).

4. The braking system (4) for a vehicle (8) according to claim 1, 2 or 3, wherein said algorithm decides whether to establish the gap (44) at a maximum or high value, which corresponds to a defined low residual torque and a high response time, or to establish the gap (44) at a low value, which corresponds to a high residual torque and a low response time.

5. The braking system (4) for a vehicle (8) according to claim 1, 2, 3 or 4, wherein said dynamic parameter of the vehicle (8) comprises a collision time estimated as the time required for a collision to occur between the vehicle (8) equipped with said braking system (4) and a further vehicle preceding it, without varying the respective speeds and trajectories of said vehicles, so that if the estimated collision time is reduced then the gap (44) is also reduced and vice versa.

6. The braking system (4) for a vehicle (8) according to claim 5, wherein said collision time is estimated as a function of a coefficient of friction of the road surface driven over by the vehicle (8) equipped with said braking system (4), so that if the coefficient of friction is reduced then the gap (44) is also reduced and vice versa.

7. The braking system (4) for a vehicle (8) according to claim 5 or 6, wherein said collision time is estimated as a function of a difference in acceleration between the vehicle (8) equipped with said braking system (4) and a further vehicle preceding it, so that if the difference in acceleration leads to a possible need for braking or a possible collision then the gap (44) is reduced and vice versa.

8. The braking system (4) for a vehicle (8) according to any of the claims from 1 to 7, wherein said dynamic parameter of the vehicle (8) comprises a hazard index, i.e., a dimensionless index defining a collision risk between two vehicles defined as the relationship between a critical braking distance and a critical hazard distance, such that if the critical braking distance is less than the critical hazard distance, the gap (44) is reduced and vice versa.

9. The braking system (4) for a vehicle (8) according to any of the claims from 1 to 8, wherein said dynamic parameter of the vehicle (8) comprises a predetermined safety distance between the vehicle (8) equipped with said braking system (4) and a further vehicle preceding it, such that if said safety distance is reduced then said gap (44) is also reduced and vice versa.

10. The braking system (4) for a vehicle (8) according to any of the claims from 1 to 9, wherein said dynamic parameter of the vehicle (8) equipped with said braking system (4) comprises an emergency signal coming from a vehicle preceding it, with which the vehicle (8) following it is in connection, and/or
wherein said dynamic parameter comprises information about real-time traffic conditions along the route of the vehicle (8), and/or
wherein said dynamic parameter of the vehicle (8) equipped with said braking system (4) comprises information about real-time conditions of the route of the vehicle (8), such as speed limits and/or incline of the road and/or bends, and/or
wherein said dynamic parameter of the vehicle (8) comprises a comfort demand by the passengers, so as to increase the gap (44) in case of a need for more comfort, and vice versa.

11. The braking system (4) for a vehicle (8) according to any of the claims from 1 to 10, wherein said variation of the gap (44) by the electric actuator (32) is of the discrete type.

12. The braking system (4) for a vehicle (8) according to claim 10 in combination with claim 4, wherein the algorithm identifies a minimum value of collision time and a maximum value of collision time, and wherein the gap variation (44) is performed discretely when the collision time exceeds the thresholds defined by said minimum and maximum collision time values respectively.

13. The braking system (4) for a vehicle (8) according to claim 12, wherein the minimum value of the collision time is 4.5 s and the maximum value of the collision time is 5 s.

14. The braking system (4) for a vehicle (8) according to any of the claims from 1 to 10, wherein said variation of the gap (44) by the electric actuator (32) is of a continuous type, so as to vary said gap (44) as a function of said dynamic parameter of the vehicle (8), between a minimum value and a maximum value.

15. A control method of a braking system comprising the steps of:
- providing a braking system (4) for a vehicle (8) comprising:
- at least one disc brake (12) comprising a brake disc (16) having a disc brake caliper (20) arranged to straddle the brake disc (16), and at least one pair of pads (24) opposite each other and acting on said brake disc (16) from opposite sides along an axial direction of actuation (A-A), parallel to an axis of rotation (X-X) of the brake disc (16),
- at least one electric actuator (32), operatively connected to a piston (36) acting as a pusher on at least one of said pads (24) along said axial actuation direction (A-A),
- a processing and control unit (40), operatively connected to said electric actuator (32), and programmed so as to move said piston (36) and the relative pad (24), along the axial direction of actuation (A-A), in a forward position so as to press the pad (24) in contact with the brake disc (16) during a braking demand, and so as to bring the piston (36) and the relative pad (24) into a rest or rearward position, in which a gap (44) is identified between the pad (24) and the brake disc (16),
- **characterised in that** the processing and control unit (40) is programmed to implement an algorithm that, in the absence of a braking demand, operates the electric actuator (32) varying said gap (44) as a function of at least one dynamic parameter of the vehicle (8) that defines the prediction of a demand for a braking action, so as to increase the gap (44) when a braking action is not deemed probable, and to reduce the gap (44) when a braking action is deemed probable.

## Patentansprüche

1. Bremssystem (4) für ein Fahrzeug (8), umfassend:
- zumindest eine Scheibenbremse (12), die eine Bremsscheibe (16) mit einem die Bremsscheibe (16) überspannend angeordneten Scheibenbremssattel (20) aufweist, und zumindest ein Paar von Klötzen (24), die einander gegenüberliegen und von gegenüberliegenden Seiten entlang einer axialen Aktivierungsrichtung (A-A) parallel zu einer Drehachse (X-X) der Bremsscheibe (16) auf die Bremsscheibe (16) wirken,
- zumindest einen elektrischen Aktuator (32), der mit einem Kolben (36) betriebsmäßig verbunden ist, der als Drücker auf zumindest einen der Klötze (24) entlang der Aktivierungsrichtung (A-A) wirkt,
- eine Prozess- und Steuereinheit (40), die mit dem elektrischen Aktuator (32) betriebsmäßig verbunden und programmiert ist, um den Kolben (36) und den entsprechenden Klotz (24) entlang der axialen Aktivierungsrichtung (A-A) in eine vorwärtige Position zu bewegen, um während einer Bremsanforderung den Klotz (24) in Kontakt mit der Bremsscheibe (16) zu drücken, und um den Kolben (36) in eine Ruhe- oder rückwärtige Position zu bringen, in der ein Spalt (44) zwischen dem Klotz (24) und der Bremsscheibe (16) identifiziert wird, **dadurch gekennzeichnet, dass** die Prozess- und Steuereinheit (40) programmiert ist, um einen Algorithmus zu implementieren, der in Abwesenheit einer Bremsanforderung den elektrischen Aktuator (32) betätigt, um den Spalt (44) als Funktion von zumindest einem dynamischen Parameter des Fahrzeugs (8) zu verändern, der die Vorhersage einer Anforderung für eine Bremsaktion definiert, um den Spalt (44) zu vergrößern, wenn die Anforderung für eine Bremsaktion nicht imminent ist, und um den Spalt (44) zu reduzieren, wenn die Anforderung für eine Bremsaktion imminent ist.

2. Das Bremssystem (4) für ein Fahrzeug (8) nach Anspruch 1, wobei der Scheibenbremssattel (20) an dem Klotz (24) Druckmittel wie etwa Federn oder Spinnen (48) aufweist, die eine elastische Aktion ausüben, um bei Abwesenheit einer Anforderung für eine Bremsaktion den Klotz (24) von der Bremsscheibe (16) axial zu trennen, um den Klotz (24) zu dem entsprechenden Kolben (36) zurückzuziehen.

3. Das Bremssystem (4) für ein Fahrzeug (8) nach Anspruch 1 oder 2, wobei der Klotz (24) mit dem entsprechenden Kolben (36) verbunden ist, um integriert damit entlang der axialen Aktivierungsrichtung (A-A) zu translatieren.

4. Das Bremssystem (4) für ein Fahrzeug (8) nach Anspruch 1, 2 oder 3, wobei der Algorithmus bestimmt, ob der Spalt (44) auf einen maximalen oder hohen Wert zu etablieren ist, der einem definierten niedrigen Restdrehmoment und einer hohen Ansprechzeit entspricht, oder ob der Spalt (44) auf einen niedrigen Wert zu etablieren ist, der einem hohen Restdrehmoment und einer niedrigen Ansprechzeit entspricht.

5. Das Bremssystem (4) für ein Fahrzeug (8) nach Anspruch 1, 2, 3 oder 4, wobei der dynamische Parameter des Fahrzeugs (8) eine Kollisionszeit aufweist, die als die Zeit geschätzt wird, die erforderlich ist, damit eine Kollision zwischen dem mit dem Bremssystem (4) ausgestatteten Fahrzeug (8) und einem weiteren ihm vorausfahrenden Fahrzeug auftritt, ohne die jeweiligen Geschwindigkeiten und Trajektorien der Fahrzeuge zu verändern, so dass, wenn die geschätzte Kollisionszeit reduziert wird, dann der Spalt (44) auch reduziert wird und umgekehrt.

6. Das Bremssystem (4) für ein Fahrzeug (8) nach Anspruch 5, wobei die Kollisionszeit als Funktion eines Reibkoeffizienten der Straßenoberfläche geschätzt wird, über die das mit dem Bremssystem (4) ausgestattete Fahrzeug (8) fährt, so dass, wenn der Reibkoeffizienten reduziert wird, dann der Spalt (44) auch reduziert wird und umgekehrt.

7. Das Bremssystem (4) für ein Fahrzeug (8) nach Anspruch 5 oder 6, wobei die Kollisionszeit als Funktion einer Beschleunigungsdifferenz zwischen dem mit dem Bremssystem (4) ausgestatteten Fahrzeug (8) und einem weiteren ihm vorausfahrenden Fahrzeug geschätzt wird, so dass, wenn die Beschleunigungsdifferenz zu einem möglichen Bremserfordernis oder einer möglichen Kollision führt, dann der Spalt (44) reduziert wird und umgekehrt.

8. Das Bremssystem (4) für ein Fahrzeug (8) nach einem der Ansprüche von 1 bis 7, wobei der dynamische Parameter des Fahrzeugs (8) einen Gefahrenindex aufweist, d. h. einen dimensionslosen Index, der als Kollisionsrisiko zwischen zwei Fahrzeugen als die Beziehung zwischen einer kritischen Bremsdistanz und einem kritischen Gefahrendistanz definiert ist, so dass, wenn die kritische Bremsdistanz kleiner als die kritische Gefahrendistanz ist, der Spalt (44) reduziert wird und umgekehrt.

9. Das Bremssystem (4) für ein Fahrzeug (8) nach einem der Ansprüche von 1 bis 8, wobei der dynamische Parameter des Fahrzeugs (8) eine vorbestimmte Sicherheitsdistanz zwischen dem mit dem Bremssystem (4) ausgestatteten Fahrzeug (8) und einem weiteren ihm vorausfahrenden Fahrzeug aufweist, so dass, wenn die Sicherheitsdistanz reduziert wird, dann der Spalt (44) auch reduziert wird und umgekehrt.

10. Das Bremssystem (4) für ein Fahrzeug (8) nach einem der Ansprüche von 1 bis 9, wobei der dynamische Parameter des mit dem Bremssystem (4) ausgestatteten Fahrzeugs (8) ein Notsignal aufweist, das von einem ihm vorausfahrenden Fahrzeug kommt, mit dem das ihm folgende Fahrzeug (8) in Verbindung steht, und/oder
wobei der dynamische Parameter Information über Echtzeit-Verkehrsbedingungen entlang der Route des Fahrzeugs (8) aufweist, und/oder
wobei der dynamische Parameter des mit dem Bremssystem (4) ausgestatteten Fahrzeugs (8) Information über Echtzeitbedingungen der Route des Fahrzeugs (8) aufweist, wie etwa Geschwindigkeitsbeschränkungen und/oder Steigungen der Straße und/oder Biegungen, und/oder
wobei der dynamische Parameter des Fahrzeugs (8) ein Komfortbedürfnis der Passagiere aufweist, um im Fall von Bedarf nach mehr Komfort den Spalt (44) zu vergrößern, und umgekehrt.

11. Das Bremssystem (4) für ein Fahrzeug (8) nach einem der Ansprüche von 1 bis 10, wobei die Veränderung des Spalts (44) durch den elektrischen Aktuator (32) vom diskreten Typ ist.

12. Das Bremssystem (4) für ein Fahrzeug (8) nach Anspruch 10 in Kombination mit Anspruch 4, wobei der Algorithmus einen Minimalwert der Kollisionszeit und einen Maximalwert der Kollisionszeit identifiziert, und wobei die Veränderung des Spalts (44) diskret ausgeführt wird, wenn die Kollisionszeit Schwellenwerte überschreitet, die jeweils durch die minimalen und maximalen Kollisionszeit-Werte definiert sind.

13. Das Bremssystem (4) für ein Fahrzeug (8) nach Anspruch 12, wobei der Minimalwert der Kollisionszeit 4,5 s und der Maximalwert der Kollisionszeit 5 s beträgt.

14. Das Bremssystem (4) für ein Fahrzeug (8) nach einem der Ansprüche 1 bis 10, wobei die Veränderung des Spalts (44) durch den elektrischen Aktuator (32) vom kontinuierlichen Typ ist, um den Spalt (44) als Funktion des dynamischen Parameters des Fahrzeugs (8) zwischen einem Minimalwert und einem Maximalwert zu verändern.

15. Steuerverfahren eines Bremssystems, welches die Schritte umfasst:
- Bereitstellen eines Bremssystems (4) für ein Fahrzeug (8), umfassend:
- zumindest eine Scheibenbremse (12), die eine Bremsscheibe (16) mit einem die Bremsscheibe (16) überspannend angeordneten Scheibenbremssattel (20) aufweist, und zumindest ein Paar von Klötzen (24), die einander gegenüberliegen und von gegenüberliegenden Seiten entlang einer axialen Aktivierungsrichtung (A-A) parallel zu einer Drehachse (X-X) der Bremsscheibe (16) auf die Bremsscheibe (16) wirken,
- zumindest einen elektrischen Aktuator (32), der mit einem Kolben (36) betriebsmäßig verbunden ist, der als Drücker auf zumindest einen der Klötze (24) entlang der axialen Aktivierungsrichtung (A-A) wirkt,
- eine Prozess- und Steuereinheit (40), die mit dem elektrischen Aktuator (32) betriebsmäßig verbunden und programmiert ist, um den Kolben (36) und den entsprechenden Klotz (24) entlang der axialen Aktivierungsrichtung (A-A) in eine vorwärtige Position zu bewegen, um während einer Bremsanforderung den Klotz (24) in Kontakt mit der Bremsscheibe (16) zu drücken, und um den Kolben (36) und den entsprechenden Klotz (24) in eine Ruhe- oder rückwärtige Position zu bringen, in der ein Spalt (44) zwischen dem Klotz (24) und der Bremsscheibe (16) identifiziert wird,
**dadurch gekennzeichnet, dass** die Prozess- und Steuereinheit (40) programmiert ist, um einen Algorithmus zu implementieren, der in Abwesenheit einer Bremsanforderung den elektrischen Aktuator (32) betätigt, um den Spalt (44) als Funktion von zumindest einem dynamischen Parameter des Fahrzeugs (8) zu verändern, der die Vorhersage einer Anforderung für eine Bremsaktion definiert, um den Spalt (44) zu vergrößern, wenn eine Bremsaktion nicht als wahrscheinlich angenommen wird, und um den Spalt (44) zu reduzieren, wenn eine Bremsaktion als wahrscheinlich angenommen wird.

## Revendications

1. Système de freinage (4) pour un véhicule (8), comprenant :
- au moins un frein à disque (12) comprenant un disque de frein (16) présentant un étrier de frein à disque (20) agencé pour enjamber le disque de frein (16), et au moins une paire de plaquettes (24) à l'opposé l'une de l'autre et agissant sur ledit disque de frein (16) depuis des côtés opposés le long d'une direction axiale d'actionnement (A-A), parallèle à un axe de rotation (X-X) du disque de frein (16),
- au moins un actionneur électrique (32), relié fonctionnellement à un piston (36) agissant comme un poussoir sur au moins l'une desdites plaquettes (24) le long de ladite direction d'actionnement (A-A),
- une unité de traitement et de commande (40), reliée fonctionnellement audit actionneur électrique (32), et programmée de manière à déplacer ledit piston (36) et la plaquette (24) relative, le long de la direction d'actionnement (A-A) axiale, dans une position vers l'avant afin de presser la plaquette (24) en contact avec le disque de frein (16) au cours d'une demande de freinage, et de manière à mettre le piston (36) dans une position de repos ou vers l'arrière, dans laquelle un espace (44) est identifié entre la plaquette (24) et le disque de frein (16),
- **caractérisé en ce que** l'unité de traitement et de commande (40) est programmée pour mettre en œuvre un algorithme qui, en l'absence de demande de freinage, fait fonctionner l'actionneur électrique (32) en faisant varier ledit espace (44) en fonction d'au moins un paramètre dynamique du véhicule (8) qui définit la prédiction d'une demande d'une action de freinage, de manière à augmenter l'espace (44) lorsque la demande d'une action de freinage n'est pas imminente, et à réduire l'espace (44) lorsque la demande d'une action de freinage est imminente.

2. Système de freinage (4) pour un véhicule (8) selon la revendication 1, dans lequel ledit étrier de frein à disque (20), au niveau de ladite plaquette (24), comprend des moyens de poussée, comme des ressorts ou des porte-segments (48), qui exercent une action élastique consistant à éloigner axialement la plaquette (24) du disque de frein (16) afin de rétracter la plaquette (24) vers le piston (36) respectif, en l'absence d'une demande d'action de freinage.

3. Système de freinage (4) pour un véhicule (8) selon la revendication 1 ou 2, dans lequel la plaquette (24) est reliée au piston (36) respectif de manière à translater d'un seul tenant avec celui-ci le long de la direction d'actionnement (A-A) axiale.

4. Système de freinage (4) pour un véhicule (8) selon la revendication 1, 2 ou 3, dans lequel ledit algorithme décide s'il faut établir l'espace (44) à une valeur maximale ou élevée, qui correspond à un couple résiduel bas défini et à un temps de réponse élevé, ou s'il faut établir l'espace (44) à une valeur basse, qui correspond à un couple résiduel élevé et à un temps de réponse bas.

5. Système de freinage (4) pour un véhicule (8) selon la revendication 1, 2, 3 ou 4, dans lequel ledit paramètre dynamique du véhicule (8) comprend un temps de collision estimé en tant que le temps qu'il faut à une collision pour se produire entre le véhicule (8) pourvu dudit système de freinage (4) et un autre véhicule qui le précède, sans faire varier les vitesses et trajectoires respectives desdits véhicules, de sorte que, si le temps de collision estimé est réduit, alors l'espace (44) soit également réduit et vice versa.

6. Système de freinage (4) pour un véhicule (8) selon la revendication 5, dans lequel ledit temps de collision est estimé en fonction d'un coefficient de frottement de la surface de la route sur laquelle se déplace le véhicule (8) pourvu dudit système de freinage (4), de sorte que, si le coefficient de frottement est réduit, alors l'espace (44) soit également réduit et vice versa.

7. Système de freinage (4) pour un véhicule (8) selon la revendication 5 ou 6, dans lequel ledit temps de collision est estimé en fonction d'une différence d'accélération entre le véhicule (8) pourvu dudit système de freinage (4) et un autre véhicule qui le précède, de sorte que, si la différence d'accélération engendre un besoin éventuel de freinage ou une éventuelle collision, alors l'espace (44) soit également réduit et vice versa.

8. Système de freinage (4) pour un véhicule (8) selon l'une quelconque des revendications 1 à 7, dans lequel ledit paramètre dynamique du véhicule (8) comprend un indice de danger, c'est-à-dire un indice sans dimension définissant un risque de collision entre deux véhicules défini comme la relation entre une distance de freinage critique et une distance de danger critique, de sorte que, si la distance de freinage critique est inférieure à la distance de danger critique, alors l'espace (44) soit également réduit et vice versa.

9. Système de freinage (4) pour un véhicule (8) selon l'une quelconque des revendications 1 à 8, dans lequel ledit paramètre dynamique du véhicule (8) comprend une distance de sécurité prédéterminée entre le véhicule (8) pourvu dudit système de freinage (4) et un autre véhicule qui le précède, de sorte que, si ladite distance de sécurité est réduite, alors ledit espace (44) soit également réduit et vice versa.

10. Système de freinage (4) pour un véhicule (8) selon l'une quelconque des revendications 1 à 9, dans lequel ledit paramètre dynamique du véhicule (8) pourvu dudit système de freinage (4) comprend un signal d'urgence provenant d'un véhicule qui le précède, avec lequel le véhicule (8) qui le suit est en connexion, et/ou
dans lequel ledit paramètre dynamique comprend des informations sur des conditions de circulation en temps réel le long de l'itinéraire du véhicule (8), et/ou
dans lequel ledit paramètre dynamique du véhicule (8) pourvu dudit système de freinage (4) comprend des informations sur des conditions en temps réel de l'itinéraire du véhicule (8), comme des limites de vitesse et/ou un dénivelé de la route et/ou des virages, et/ou
dans lequel ledit paramètre dynamique du véhicule (8) comprend une demande de confort par les passagers, de manière à augmenter l'espace (44) en cas de besoin de confort supplémentaire, et vice versa.

11. Système de freinage (4) pour un véhicule (8) selon l'une quelconque des revendications 1 à 10, dans lequel ladite variation de l'espace (44) par l'actionneur électrique (32) est de type discret.

12. Système de freinage (4) pour un véhicule (8) selon la revendication 10 en combinaison avec la revendication 4, dans lequel l'algorithme identifie une valeur minimale de temps de collision et une valeur maximale de temps de collision, et dans lequel la variation d'espace (44) est réalisée de manière discrète lorsque le temps de collision dépasse les seuils définis respectivement par lesdites valeurs de temps de collision minimale et maximale.

13. Système de freinage (4) pour un véhicule (8) selon la revendication 12, dans lequel la valeur minimale du temps de collision est 4,5 s et la valeur maximale du temps de collision est 5 s.

14. Système de freinage (4) pour un véhicule (8) selon l'une quelconque des revendications 1 à 10, dans lequel ladite variation de l'espace (44) par l'actionneur électrique (32) est de type continu, de manière à faire varier ledit espace (44) en fonction dudit paramètre dynamique du véhicule (8), entre une valeur minimale et une valeur maximale.

15. Procédé de commande d'un système de freinage comprenant les étapes suivantes :
- la fourniture d'un système de freinage (4) pour un véhicule (8) comprenant :
- au moins un frein à disque (12) comprenant un disque de frein (16) présentant un étrier de frein à disque (20) agencé pour enjamber le disque de frein (16), et au moins une paire de plaquettes (24) à l'opposé l'une de l'autre et agissant sur ledit disque de frein (16) depuis des côtés opposés le long d'une direction axiale d'actionnement (A-A), parallèle à un axe de rotation (X-X) du disque de frein (16),
- au moins un actionneur électrique (32), relié fonctionnellement à un piston (36) agissant comme un poussoir sur au moins l'une desdites plaquettes (24) le long de ladite direction d'actionnement (A-A) axiale,
- une unité de traitement et de commande (40), reliée fonctionnellement audit actionneur électrique (32), et programmée de manière à déplacer ledit piston (36) et la plaquette (24) relative, le long de la direction d'actionnement (A-A) axiale, dans une position vers l'avant afin de presser la plaquette (24) en contact avec le disque de frein (16) au cours d'une demande de freinage, et de manière à mettre le piston (36) et la plaquette (24) relative dans une position de repos ou vers l'arrière, dans laquelle un espace (44) est identifié entre la plaquette (24) et le disque de frein (16),
**caractérisé en ce que** l'unité de traitement et de commande (40) est programmée pour mettre en œuvre un algorithme qui, en l'absence de demande de freinage, fait fonctionner l'actionneur électrique (32) en faisant varier ledit espace (44) en fonction d'au moins un paramètre dynamique du véhicule (8) qui définit la prédiction d'une demande d'une action de freinage, de manière à augmenter l'espace (44) lorsqu'une action de freinage n'est pas considérée comme probable et à réduire l'espace (44) lorsqu'une action de freinage est considérée comme probable.
